## Europäisches Patentamt
## European Patent Office
## Office européen des brevets

(11) Veröffentlichungsnummer: **0 016 256**
**B1**

# EUROPÄISCHE PATENTSCHRIFT

(45) Veröffentlichungstag der Patentschrift:
**25.08.82**

(21) Anmeldenummer: **79104985.1**

(22) Anmeldetag: **06.12.79**

(51) Int. Cl.³: **H 04 L 27/16,** H 04 L 27/14 //
H03D3/04, H03K9/06

(54) Schaltungsanordnung zum Korrigieren von Schrittverzerrungen bei einer Übertragung von Daten mit Frequenzmodulation.

(30) Priorität: **19.12.78 DE 2854833**

(43) Veröffentlichungstag der Anmeldung:
**01.10.80 Patentblatt 80/20**

(45) Bekanntmachung des Hinweises auf die Patenterteilung:
**25.08.82 Patentblatt 82/34**

(84) Benannte Vertragsstaaten:
**CH FR GB NL SE**

(56) Entgegenhaltungen:
**DE-A-1 159 009**
**DE-A-2 611 099**
**DE-B-2 606 515**
**DE-C-1 939 067**
**GB-A-1 367 585**
**US-A-3 461 392**

(73) Patentinhaber: **SIEMENS AKTIENGESELLSCHAFT**
**Berlin und München, Postfach 22 02 61,**
**D-8000 München 22 (DE)**

(72) Erfinder: **Paetsch, Werner, Noestrasse 7,**
**D-8000 München 71 (DE)**

## Schaltungsanordnung zum Korrigieren von Schrittverzerrungen bei einer Übertragung von Daten mit Frequenzmodulation

Die Erfindung bezieht sich auf eine Schaltungsanordnung zum Korrigieren von Schrittverzerrungen bei einer Übertragung von Daten unter Verwendung von frequenzmodulierten Datensignalen, wobei ein Demodulator vorgesehen ist, der die Zeitdauern zwischen Flanken der frequenzmodulierten Datensignale mit einer mittels eines Zeitglieds erzeugten Meßzeitdauer vergleicht und nach einer Filterung demodulierte Datensignale erzeugt, die bei Frequenzabweichungen der frequenzmodulierten Datensignale Schrittverzerrungen aufweisen.

Aus der DE-AS 2 606 515 ist ein Demodulator für eine Demodulation von frequenzmodulierten Datensignalen bekannt, der Signale erzeugt, die der Differenz zwischen der Zeitdauer zwischen jeweils zwei Flanken oder Nulldurchgängen der frequenzmodulierten Datensignale und einer konstanten Meßzeitdauer proportional sind. Diese Signale werden unter Verwendung eines Tiefpasses integriert und mittels einer Schwellwertstufe in binäre demodulierte Datensignale umgesetzt. Die Binärwerte dieser demodulierten Datensignale sind den Kennfrequenzen der frequenzmodulierten Datensignale zugeordnet.

Die bekannte Schaltungsanordnung enthält zum Erzeugen der Meßzeitdauer ein Zeitglied, das als Zähler ausgebildet ist, der durch Taktimpulse mit konstanter Folgefrequenz fortgeschaltet wird. Bei Flanken oder Nulldurchgängen der frequenzmodulierten Datensignale wird der Zähler jeweils auf einen Anfangswert zurückgesetzt. Gleichzeitig wird auch ein Flipflop zurückgesetzt. Anschließend wird der Zähler durch die Taktimpulse bis zu einem vorgegebenen Zählerstand fortgeschaltet, der zusammen mit dem Anfangszählerstand und der Folgefrequenz der Taktimpulse die Meßzeitdauer festlegt. Wenn der Zähler diesen vorgegebenen Zählerstand erreicht hat, wird das Flipflop gesetzt und es bleibt so lange gesetzt, bis es von der nächsten Flanke oder einem entsprechenden Nulldurchgang der frequenzmodulierten Datensignale wieder zurückgesetzt wird. Falls mit dem Setzen des Flipflops gleichzeitig der Zähler gesperrt wird, so gibt die Dauer des das Flipflop setzenden Signals unmittelbar die Differenz der Zeitdauer zwischen den Flanken oder den Nulldurchgängen der frequenzmodulierten Datensignale und der Meßzeitdauer an. Dieses Signal wird unter Verwendung eines Tiefpasses gefiltert. Die Momentanwerte der Signale am Ausgang des Tiefpasses sind den Folgefrequenzen der entsprechenden frequenzmodulierten Datensignale am Eingang des Demodulators zugeordnet. Dem Tiefpaß ist eine Schwellwertstufe nachgeschaltet, die binäre demodulierte Datensignale erzeugt, deren Binärwerte den Kennfrequenzen der frequenzmodulierten Datensignale zugeordnet sind.

Falls die frequenzmodulierten Datensignale mit Frequenzabweichungen behaftet sind, weisen die demodulierten Datensignale Schrittverzerrungen auf, die dadurch zustande kommen, daß den Signalen am Eingang der Schwellwertstufe eine der Frequenzabweichung entsprechende Gleichspannung überlagert wird.

Zur Beseitigung dieser Schrittverzerrungen ist es aus der DE-PS 1 939 067 bereits bekannt, die überlagerte Gleichspannung am Ausgang des Tiefpasses zu kompensieren. Diese Schaltung erfordert jedoch einen verhältnismäßig großen Aufwand, da sie Schaltelemente der analogen Schaltungstechnik benutzt. Sie ist auch von Temperatur- und Spannungsschwankungen abhängig und außerdem bei intermittierendem Betrieb nicht zu verwenden.

Der Erfindung liegt daher die Aufgabe zugrunde, eine Schaltungsanordnung zum Korrigieren der Schrittverzerrungen anzugeben, die von Umgebungsbedingungen weitgehend unabhängig ist und die einen geringen Aufwand erfordert.

Erfindungsgemäß wird die Aufgabe bei der Schaltungsanordnung der eingangs genannten Art gelöst durch einen Vergleicher, der die Momentanwerte der demodulierten Datensignale mit den Momentanwerten von Bezugssignalen vergleicht, deren Folgefrequenz gleich ist der doppelten Schrittfrequenz der demodulierten Datensignale und durch ein Integrierglied, das das Ausgangssignal des Vergleichers integriert und an den Demodulator Regelsignale abgibt, die durch Verändern der Meßzeitdauer den Schrittverzerrungen der demodulierten Datensignale entgegenwirken.

Die Schaltungsanordnung hat den Vorteil, daß sie wegen ihres geringen Aufwand kostengünstig hergestellt werden kann und weitgehend als integrierter Halbleiterbaustein realisierbar ist. Sie arbeitet bereits bei kleinen Frequenzabweichungen der frequenzmodulierten Signale mit großer Genauigkeit und mit großer Zuverlässigkeit. Die Anzahl der Übertragungsfehler bei Frequenzabweichungen wird durch die Verwendung der Schaltungsanordnung wesentlich vermindert. Außerdem eignet sie sich auch für eine Verwendung bei einer intermittierenden Übertragung von Daten.

Falls der Demodulator die Meßzeitdauer auf digitale Weise erzeugt und zu diesem Zweck als Zeitglied ein Zähler vorgesehen ist, der durch Taktimpulse mit konstanter Folgefrequenz fortgeschaltet wird und dessen Zählbereich die Meßzeitdauer bestimmt, wird die Meßzeitdauer in besonders vorteilhafter Weise dadurch verändert, daß die von dem Integrierglied abgegebenen Regelsignale dem Zähler zugeführt werden und dessen Zählbereich verändern.

Bei einem konstanten größten Zählerstand der ersten Zählstufe ist es besonders günstig, wenn die Regelsignale den Anfangszählerstand des Zählers im Zeitglied verändern.

Eine vorteilhafte Ausgestaltung der Schaltungsanordnung wird dadurch erreicht, daß das Integrierglied eine erste Zählstufe enthält, die in Abhängigkeit vom Ausgangssignal des Vergleichers während festgelegten Zeitdauern aufwärts oder abwärts gezählt wird, und eine zweite Zählstufe enthält, die immer dann aufwärts bzw. abwärts gezählt wird, wenn die erste Zählstufe vorgegebene Zählerstände über- oder unterschritten hat und die die Regelsignale abgibt.

Die Ermittlung der vorgegebenen Zählerstände erfolgt auf besonders einfache Weise, wenn das Integrierglied einen Decodierer enthält, der die vorgegebenen Zählerstände der ersten Zählstufe erkennt und entsprechende Signale an die zweite Zählstufe abgibt.

Der Vergleich der Momentanwerte der demodulierten Datensignale mit den Momentanwerten der Bezugssignale erfolgt auf besonders einfache Weise, wenn als Vergleicher ein Äquivalenzglied vorgesehen ist.

Im folgenden wird ein Ausführungsbeispiel der Schaltungsanordnung anhand von Zeichnungen näher erläutert. Es zeigt

Fig. 1 ein Blockschaltbild der Schaltungsanordnung,

Fig. 2 Signale an verschiedenen Punkten eines Demodulators,

Fig. 3 unverzerrte und mit Schrittverzerrungen versehene demodulierte Datensignale,

Fig. 4 weitere Signale an verschiedenen Punkten der Schaltungsanordnung.

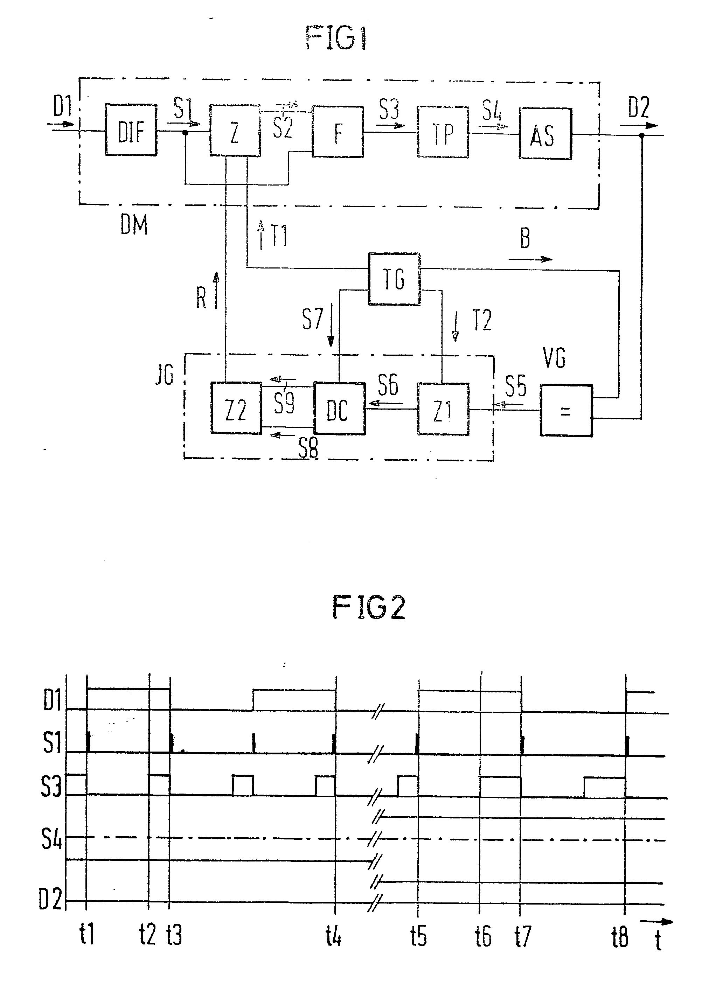

Die in Fig. 1 dargestellte Schaltungsanordnung zum Korrigieren von Schrittverzerrungen enthält einen Demodulator DM, einen Vergleicher VG, ein Integrierglied JG und einen Taktgeber TG. Dem Demodulator DM werden frequenzmodulierte Datensignale D1 zugeführt. Bei einer Übertragung von binär codierten Daten wird jedem Binärwert der übertragenen Daten eine Kennfrequenz zugeordnet. Bei einer Änderung des zu übertragenden Binärwerts ändert sich die Folgefrequenz der Datensignale D1 kontinuierlich zwischen diesen beiden Kennfrequenzen.

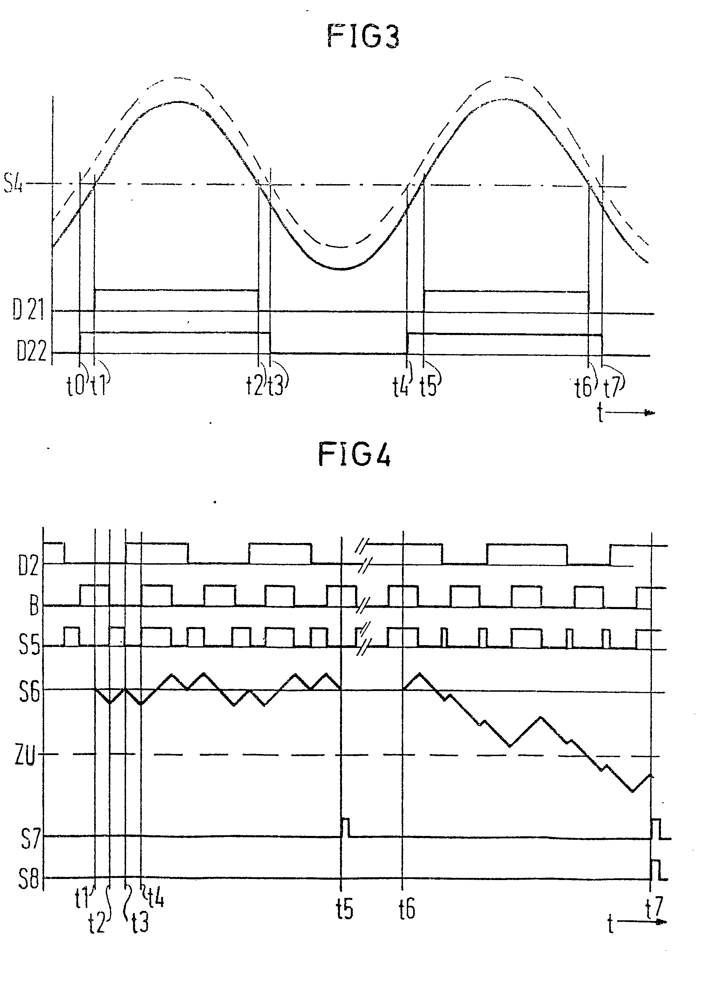

Der Demodulator DM ist beispielsweise ähnlich ausgebildet wie ein in der DE-AS 2 606 515 beschriebener Demodulator. Die Arbeitsweise des Demodulators DM wird im folgenden zusammen mit den in Fig. 2 und Fig. 3 dargestellten Zeitdiagrammen beschrieben.

Bei den in Fig. 2 dargestellten Zeitdiagrammen sind in Abszissenrichtung die Zeit t und in Ordinatenrichtung die Momentanwerte von Signalen an verschiedenen Punkten des Demodulators DM dargestellt.

Zwischen den Zeitpunkten t1 und t4 wird angenommen, daß die Folgefrequenz der Datensignale D1 gleich ist der oberen Kennfrequenz, die einem Binärwert 0 zugeordnet ist, während zwischen den Zeitpunkten t5 und t8 angenommen wird, daß die Folgefrequenz der Datensignale D1 gleich ist der dem Binärwert 1 zugeordneten unteren Kennfrequenz. Die Datensignale D1 werden einem Differenzierglied DIF zugeführt, das bei jeder Flanke oder jedem

entsprechenden Nulldurchgang der Datensignale D1 einen Impuls S1 erzeugt. Die Impulse S1 lösen einerseits in einem Zeitglied Z eine Meßzeitdauer aus und setzen andererseits ein Flipflop F zurück. So wird beispielsweise zum Zeitpunkt t1, wenn das Datensignal D1 seinen Binärwert von 0 nach 1 ändert, ein Impuls S1 erzeugt, der die Meßzeitdauer auslöst und das Flipflop F zurücksetzt. Mit dem Zurücksetzen des Flipflops F nimmt das Signal S3 an seinem Ausgang den Binärwert 0 an. Zum Zeitpunkt t2 ist die Meßzeitdauer abgelaufen und das Zeitglied Z gibt ein Signal S2 ab, das das Flipflop F setzt. Das Signal S3 nimmt damit den Binärwert 1 an. Zum Zeitpunkt t3 ändert das Datensignal D1 seinen Binärwert von 1 nach 0 und es wird wieder ein Impuls S1 erzeugt, der das Flipflop F zurücksetzt, so daß das Signal S3 wieder den Binärwert 0 annimmt.

Das Zeitglied Z ist beispielsweise als monostabile Kippstufe ausgebildet oder als Zähler, der mit jedem Impuls S1 auf einen Anfangswert zurückgesetzt wird, durch in einem Taktgeber TG erzeugte Taktimpulse T1 fortgeschaltet wird und beim Erreichen eines vorgegebenen Zählerstands das Signal S2 erzeugt. Dieses Signal S2 ist beispielsweise ein von im Handel erhältlichen Zählern abgegebenes Übertragssignal. Der Anfangszählerstand, der Endzählerstand und die Folgefrequenz der Taktimpulse T1 bestimmen die Meßzeitdauer und sie wird so festgelegt, daß sie kleiner ist als die Zeitdauer zwischen den Flanken der Datensignale D1 oder kleiner ist als die Periodendauer der Datensignale D1. Die Impulsdauer der Signale S3 ist in jedem Fall proportional der Differenz aus der Zeitdauer zwischen den Flanken der Datensignale D1 und der Meßzeitdauer. Zwischen den Zeitpunkten t5 und t7 wiederholen sich entsprechende Vorgänge wie zwischen den Zeitpunkten t1 und t3. Da die Folgefrequenz der Datensignale D1 kleiner ist und zwischen den Zeitpunkten t5 und t6 die gleiche Meßzeitdauer auftritt wie zwischen den Zeitpunkten t1 und t2, ist die Impulsdauer der Signale S3 zwischen den Zeitpunkten t6 und t7 größer als zwischen den Zeitpunkten t2 und t3. Die Impulsdauern der Signale S3 sind damit ein Maß für die Folgefrequenz der Datensignale D1.

Die Signale S3 werden einem Tiefpaß TP zugeführt, der an seinem Ausgang Signale S4 abgibt, die den integrierten Signalen S3 entsprechen. Die Signale S4 werden einer Abtaststufe AS zugeführt, die in Abhängigkeit von den Signalen S4 an ihrem Ausgang binäre demodulierte Datensignale D1 abgibt. Wenn, wie zwischen den Zeitpunkten t1 und t4 die Folgefrequenz der Datensignale D1 gleich ist der oberen Kennfrequenz und damit die Signale S3 eine schmale Impulsdauer aufweisen, liegt der Momentanwert der Signale S4 unterhalb einer vorgegebenen, strichpunktiert dargestellten Schwelle und die Abtaststufe AS gibt dann ein Datensignal D2 mit dem Binärwert 0 ab. Wenn, wie zwischen den Zeitpunkten t5 und t8 die Folgefrequenz der Datensignale D1 gleich ist der

unteren Kennfrequenz und die Impulsdauer der Signale S3 damit größer ist, liegt der Momentanwert der Signale S4 über dem Schwellenwert und die Abtaststufe AS gibt dann ein Datensignal D2 mit dem Binärwert 1 ab.

Bei den in Fig. 3 dargestellten Zeitdiagrammen sind in Abszissenrichtung die Zeit t und in Ordinatenrichtung die Signale S4 und die Datensignale D2 für den Fall dargestellt, daß die frequenzmodulierten Datensignale D1 keine und eine vorgegebene Frequenzabweichung aufweisen.

Falls die Datensignale D1 keine Frequenzabweichung aufweisen und wechselweise die Binärwerte 1 und 0 übertragen werden, überschreitet das Signal S4 zu den äquidistanten Zeitpunkten t1, t2, t5 und t6 die strichpunktiert eingezeichnete Schwelle und das demodulierte Datensignal D21 ändert jeweils zu diesen Zeitpunkten seinen Binärwert.

Falls die Datensignale D1 eine Frequenzabweichung zu niedrigen Frequenzen hin aufweisen, sind die Impulsdauern der Signale S3 größer und die Signale S4 haben damit größere Momentanwerte. Die Schwelle in der Abtaststufe wird damit zu den Zeitpunkten t0, t3, t4 und t7 über- oder unterschritten. Die Zeitdauern zwischen den Flanken der Datensignale D22 sind damit nicht mehr gleich groß, so daß Schrittverzerrungen auftreten.

Das Korrigieren dieser Schrittverzerrungen wird nun im folgenden im Zusammenhang mit den in Fig. 4 dargestellten Zeitdiagrammen beschrieben.

Bei den in Fig. 4 dargestellten Zeitdiagrammen sind in Abszissenrichtung die Zeit t und in Ordinatenrichtung die Momentanwerte von Signalen an verschiedenen Punkten der Schaltungsanordnung dargestellt. Aus Gründen der Übersichtlichkeit werden die Zählerstände einer ersten Zählstufe Z1 in analoger Form dargestellt, wie sie beispielsweise am Ausgang eines dieser Zählstufe nachgeschalteten Digital-Analog-Wandlers abgegeben werden würden.

Es wird angenommen, daß die Datensignale D2 zwischen den Zeitpunkten t1 und t5 keine Schrittverzerrungen und zwischen den Zeitpunkten t6 und t7 Schrittverzerrungen aufweisen. In beiden Fällen wird davon ausgegangen, daß wechselweise die Binärwerte 1 und 0 übertragen werden.

Der Taktgeber TG erzeugt Bezugssignale B, deren Folgefrequenz gleich ist der doppelten Schrittfrequenz der Datensignale D2 und die mit den Datensignalen D2 derart synchronisiert sind, daß die Flanken der Datensignale D2 jeweils in die Mitte zwischen zwei Flanken der Bezugssignale B fallen. Die Datensignale D2 und die Bezugssignale B werden einem Vergleicher VG zugeführt, der beispielsweise als Äquivalenzglied ausgebildet ist. Der Vergleicher VG erzeugt Signale S5, die immer dann den Binärwert 1 bzw. 0 annehmen, wenn die Datensignale D2 und die Bezugssignale B gleichen bzw. unterschiedlichen Binärwert aufweisen. Die Signale S5 werden dem Integrierglied JG zugeführt.

Das Integrierglied JG integriert die Signale S5 und gibt Regelsignale R an das Zeitglied Z ab, das im Falle einer Schrittverzerrung die Meßzeitdauer derart verändert, daß der Schrittverzerrung entgegengewirkt wird.

Das Integrierglied JG enthält eine erste Zählstufe Z1, die durch Taktimpulse T2 jeweils während zwei Periodendauern der Datensignale D2 fortgeschaltet wird. Die Zählstufe wird jeweils aufwärts bzw. abwärts gezählt, wenn das Signal S5 den Binärwert 1 bzw. 0 hat. Ein Decodierer DC prüft die durch Signale S6 dargestellten Zählerstände der Zählstufe Z1, ob sie vorgegebene obere Zählerstände überschreiten oder untere Zählerstände unterschreiten.

Zwischen den Zeitpunkten t1 und t2 und zwischen den Zeitpunkten t3 und t4 haben die Datensignale D2 und die Bezugssignale B unterschiedliche Binärwerte und das Signal S5 hat damit jeweils den Binärwert 0. Zwischen den Zeitpunkten t2 und t3 haben die Datensignale D2 und die Bezugssignale B gleiches Vorzeichen, so daß das Signal S5 den Binärwert 1 hat. Zwischen den Zeitpunkten t1 und t2 und t3 und t4 wird damit die Zählerstufe Z1 abwärts gezählt, während sie zwischen den Zeitpunkten t2 und t3 aufwärts gezählt wird. Zwischen den Zeitpunkten t4 und t5 wird die Zählerstufe Z1 in ähnlicher Weise zwischen den Zeitpunkten t1 und t4 wechselweise aufwärts und abwärts gezählt. Zum Zeitpunkt t5 wird durch ein vom Taktgeber TG abgegebenes Signal S7 abgefragt, ob der Zählerstand innerhalb oder außerhalb des oberen und des unteren Zählerstands liegt. Da angenommen wurde, daß keine Schrittverzerrung vorliegt, hat die Zählstufe Z1 zum Zeitpunkt t5 den Zählerstand 0, der innerhalb der vorgegebenen Zählerstände liegt. Am Ausgang des Decodierers DC wird damit kein Signal abgegeben.

In ähnlicher Weise wie zwischen den Zeitpunkten t1 und t5 wird zwischen den Zeitpunkten t6 und t7 die Zählstufe Z1 wechselweise aufwärts und abwärts gezählt. Da zwischen den Zeitpunkten t6 und t7 jedoch eine Schrittverzerrung angenommen wurde, wird die Zählstufe Z1 häufiger in einer Richtung, hier abwärts als in der anderen Richtung, hier aufwärts gezählt, so daß hier zum Zeitpunkt t7 ein negativer Zählerstand vorliegt. Dieser negative Zählerstand unterschreitet einen unteren Zählerstand ZU. Mit dem Auftreten des Signals S7 gibt der Decodierer DC ein Signal S8 an eine zweite Zählstufe Z2 ab, die durch das Signal S8 um eine Einheit abwärts gezählt wird. Falls der Zählerstand am Ende der Zählung größer ist als der obere Zählerstand wird ein entsprechendes Signal S9 abgegeben, das die Zählstufe Z2 um eine Einheit aufwärts zählt.

Wenn keine Schrittverzerrung vorhanden ist, ist der Zählerstand der Zählerstufe Z2 gleich dem Anfangszählerstand des Zählers in dem Zeitglied Z. Der Zählerstand der Zählerstufe Z2 wird durch

Regelsignale R dargestellt, die den parallelen Eingängen des Zählers in dem Zeitglied Z zugeführt werden. Wenn durch das Signal S8 der Zählerstand der Zählstufe S2 vermindert wird, wird auch der Anfangszählerstand des Zählers im Zeitglied Z vermindert, so daß die Meßzeitdauer vergrößert wird, da mehr Taktimpulse T erforderlich sind, bis der Zähler mit dem Zeitglied Z den vorgegebenen Endzählerstand erreicht. Die Impulsdauern der Signale S3 werden damit verkürzt und der Gleichspannungsanteil infolge der Frequenzabweichung wird damit vermindert. Dieser Vorgang wiederholt sich so lange, bis der durch die Frequenzabweichung verursachte Gleichspannungsanteil völlig ausgeregelt wurde.

Um nicht bei jeder Schrittverzerrung, beispielsweise infolge von einmaligen Störungen die Meßzeitdauer zu verändern ist es zweckmäßig, wenn die Regelsignale R nur den höherwertigen Stufen der Zählerstufe Z2 entnommen werden. In diesem Fall muß die Zählstufe Z2 erst mehrmals nacheinander in einer Richtung gezählt werden, bevor sich die Regelsignale R verändern.

Der Zähler in dem Zeitglied Z und die Zählstufe Z1 und Z2 sind als handelsübliche Zähler ausgebildet, wobei die Zählstufen Z1 und Z2 in Aufwärtsrichtung und Abwärtsrichtung fortschaltbar sind. Der Tiefpaß TP ist vorzugsweise als aktiver Tiefpaß in bekannter Weise ausgebildet und die Abtaststufe AS wird bevorzugt unter Verwendung eines Operationsverstärkers als Schmitt-Trigger mit geringer Hysterese ausgebildet.

## Patentansprüche

1. Schaltungsanordnung zum Korrigieren von Schrittverzerrungen bei einer Übertragung von Daten unter Verwendung von frequenzmodulierten Datensignalen, wobei ein Demodulator vorgesehen ist, der die Zeitdauer zwischen Flanken der frequenzmodulierten Datensignale mit einer mittels eines Zeitglieds erzeugten Meßzeitdauer vergleicht und nach einer Filterung demodulierte Datensignale erzeugt, die bei Frequenzabweichungen der frequenzmodulierten Datensignale Schrittverzerrungen aufweisen, gekennzeichnet durch einen Vergleicher (VG), der die Momentanwerte der demodulierten Datensignale (D2) mit den Momentanwerten von Bezugssignalen (B) vergleicht, deren Folgefrequenz gleich ist der doppelten Schrittfrequenz der demodulierten Datensignale (D2) und durch ein Integrierglied (JG), das das Ausgangssignal (S5) des Vergleichers (VG) integriert und an den Demodulator (DM) Regelsignale (R) abgibt, die durch Verändern der Meßzeitdauer den Schrittverzerrungen der demodulierten Datensignale (D2) entgegenwirken.

2. Schaltungsanordnung nach Anspruch 1, bei der das Zeitglied im Demodulator aus einem Zähler gebildet wird, der durch Taktimpulse mit konstanter Folgefrequenz fortgeschaltet wird und dessen Zählbereich die Meßzeitdauer bestimmt, dadurch gekennzeichnet, daß die von dem Integrierglied (JG) abgegebenen Regelsignale (R) dem Zähler in dem Zeitglied (Z) zugeführt werden und dessen Zählbereich verändern.

3. Schaltungsanordnung nach Anspruch 2, dadurch gekennzeichnet, daß die Regelsignale (R) den Anfangszählerstand des Zählers im Zeitglied (Z) verändern.

4. Schaltungsanordnung nach einem der Ansprüche 1 bis 3, dadurch gekennzeichnet, daß das Integrierglied (JG) eine erste Zählstufe (Z1) enthält, die in Abhängigkeit vom Ausgangssignal (S5) des Vergleichers (VG) während festgelegten Zeitdauern aufwärts oder abwärts gezählt wird und eine zweite Zählstufe (Z2) enthält, die immer dann aufwärts bzw. abwärts gezählt wird, wenn die erste Zählstufe vorgegebene Zählerstände über- oder unterschritten hat und die die Regelsignale (R) abgibt.

5. Schaltungsanordnung nach Anspruch 4, dadurch gekennzeichnet, daß das Integrierglied (JG) einen Decodierer (DC) enthält, der die vorgegebenen Zählerstände der ersten Zählstufe (Z1) erkennt und entsprechende Signale (S8, S9) an die zweite Zählstufe (Z2) abgibt.

6. Schaltungsanordnung nach einem der Ansprüche 1 bis 5, dadurch gekennzeichnet, daß als Vergleicher (VG) ein Äquivalenzglied vorgesehen ist.

## Claims

1. A circuit arrangement for correcting signal element distortions during a data transmission employing frequency-modulated signals, wherein a demodulator is provided which compares the time lapse between flanks of the frequency-modulated data signals with a test period produced by a timer unit and which after filtering produces demodulated data signals which exhibit signal element distortions in the case of frequency deviations of the frequency-modulated data signals, characterised by a comparator (VG) which compares the instantaneous values of the demodulated data signals (D2) with the instantaneous values of reference signals (B) having a repetition frequency twice that of the signal element frequency of the demodulated data signals (D2), and by an integrating stage (JG) which integrates the output signals (S5) of the comparator (VG) and emits to the demodulator (DM) regulating signals (R) that counteract the signal element distortions of the demodulated data signals (D2) by changing the test period duration.

2. A circuit arrangement as claimed in claim 1, wherein the timer unit in the demodulator is formed by a counter which is advanced by clock pulses having a constant repetition frequency and whose counting range determines the test period duration, characterised in that the regulating signals (R) emitted by the integrating stage (JG) are fed to the counter in the timer unit (Z) and change the counting range thereof.

3. A circuit arrangement as claimed in claim 2, characterised in that the regulating signals (R) change the initial count of the counter in the timer unit (Z).

4. A circuit arrangement as claimed in one of claim 1 to 3, characterised in that the integrating stage (JG) comprises a first counting stage (Z1) which, in dependence upon the output signal (S5) of the comparator (VG), counts up or down during predetermined periods of time and comprises a second counting stage (Z2) which counts up or down, as the case may be, when the first counting stage has overshot or undershot predetermined counts and which emits the regulating signals (R).

5. A circuit arrangement as claimed in claim 4, characterised in that the integrating stage (JG) comprises a decoder (DC) which recognises the predetermined counts of the first counting stage (Z1) and emits corresponding signals (S8, S9) to the second counting stage (Z2).

6. A circuit arrangement as claimed in one of claims 1 to 5, characterised in that an equivalence gate is provided as comparator (VG).

**Revendications**

1. Montage pour corriger la distorsion des intervalles unitaires dans la transmission de données avec mise en oeuvre de signaux de données modulés en fréquence, du type dans lequel il est prévu un démodulateur qui compare les durées entre les flancs des signaux de données modulés en fréquence avec une durée de mesure produite à l'aide d'un organe temporisateur et fournissant, après filtrage, des signaux de données démodulés présentant des distorsions des intervalles unitaires lors d'écarts des fréquences des signaux de données modulés en fréquence, caractérisé par un comparateur (VG) qui compare les valeurs instantanées des signaux de données démodulés (D2) avec les valeurs instantanées de signaux de référence (B) dont la fréquence de répétition est le double de la fréquence d'intervalles unitaires des signaux de données démodulés (D2), et par un organe intégrateur (JG) qui intègre le signal de sortie (S5) du comparteur (VG) et fournit au démodulateur (DM) des signaux de régulation (R) qui, par modification de la durée de mesure, agissent à l'encontre des distorsions des intervalles unitaires des signaux de données démodulés (D2).

2. Montage selon la revendication 1, dans lequel l'organe temporisateur contenu dans le démodulateur est constitué par un compteur qui est commandé par des impulsions de cadence de fréquence de répétition constante et dont l'étendue de comptage détermine la durée de mesure, caractérisé par le fait que les signaux de régulation (R) émis par l'organe intégrateur (JG) sont appliqués au compteur contenu dans l'organe de temporisation (Z) et modifient son étendue de comptage.

3. Montage selon la revendication 2, caractérisé par fait que les signaux de régulation (R) modifient l'état de comptage initial du compteur contenu dans l'organe de temporisation (Z).

4. Montage selon l'une des revendications 1 à 3, caractérisé par le fait que l'organe intégrateur (JG) comporte un premier étage de comptage (Z1) qui, en fonction du signal de sortie (S5) du comparateur (VG), compte dans le sens additionneur ou soustracteur pendant des durées déterminées, ainsi qu'un second étage de comptage (Z2) qui compte toujours dans le sens additionneur ou soustracteur lorsque le premier étage de comptage dépasse dans un sens ou dans l'autre des états de comptage donnés à l'avance, et qui émet des signaux de régulation (R).

5. Montage selon la revendication 4, caractérisé par le fait que l'organe intégrateur (JG) comporte un décodeur (DC) qui reconnait les états de comptage prédéterminés du premier étage de compage (Z1) et émet des signaux correspondants (S8, S9) pour le second étage de comptage (Z2).

6. Montage selon l'une des revendications 1 à 5, caractérisé par le fait que le comparateur (VG) est un élément à coïncidence.

## FIG1

## FIG2

# FIG3

# FIG4